# EUROPÄISCHE PATENTSCHRIFT

(11) **EP 3 505 469 B1**
(45) Veröffentlichungstag und Bekanntmachung des Hinweises auf die Patenterteilung: **04.11.2026**
(21) Anmeldenummer: 18211558.4
(22) Anmeldetag: 11.12.2018
(51) Int. Cl.: B65G 47/86

(54) **AKTIVE KLAMMERVORRICHTUNG**
ACTIVE CLAMPING DEVICE
DISPOSITIF DE SERRAGE ACTIF

(30) Priorität: 11.12.2017 DE 102017129506
(43) Veröffentlichungstag der Anmeldung: 03.07.2019
(73) Patentinhaber: KRONES AG, 93073 Neutraubling (DE)
(72) Erfinder: Landler, Bruno, 93073 Neutraubling (DE)
(74) Vertreter: Nordmeyer, Philipp Werner

(56) Entgegenhaltungen:
- EP-A1- 2 138 434
- EP-A1- 2 653 436
- EP-A1- 2 716 593
- EP-A1- 3 181 496
- WO-A1-2016/169717
- DE-A1- 102005 014 838
- US-A1- 2014 175 819

## Beschreibung

### Technisches Gebiet

Die vorliegende Erfindung betrifft eine aktive Klammervorrichtung zum Halten eines Behälters in einer Behälterbehandlungsvorrichtung und eine Behälterbehandlungsvorrichtung.

### Stand der Technik

Es ist bekannt, in Getränkeabfüllanlagen die jeweils zu befüllenden Behälter beziehungsweise bereits befüllte Behälter mittels Klammervorrichtungen durch die einzelnen Behandlungsstationen der Behälterbehandlungsvorrichtung zu transportieren. Dabei sind unterschiedliche Klammervorrichtungen bekannt, welche die jeweiligen zu behandelnden Behälter auf unterschiedliche Art und Weise halten.

So sind beispielsweise passive Klammervorrichtungen bekannt, welche lediglich durch das Einschieben des jeweiligen Behälters in die Klammervorrichtung elastisch vorgespannt werden und dann den Behälter halten. Aus der DE 10 2015 218 204 A1 ist eine solche Klammer zum Greifen von Behältern bekannt. Die Klammer weist dabei eine feste Position auf. Zum Greifen eines Behälters muss dieser in die Klammer gedrückt werden. Dabei werden die steifen Greifarme nach außen gespreizt, so dass der Behälter gegen die aufgrund des Spreizens der Klammer entstehende Schließkraft der Greifarme bewegt werden muss. Hierdurch wird der Behälter beim Einschieben mit einer hohen Kraft beaufschlagt, so dass solche Haltevorrichtungen zum Greifen beziehungsweise Halten fragiler und/oder leicht verformbarer sowie dünnwandiger Behälter nicht geeignet sind. Zumindest ist eine Neigung zum Verkratzen der Oberflächen der jeweiligen Behälter gegeben, so dass die Qualität der Behälter herabgesetzt ist.

Weiterhin bekannt sind aktive Klammervorrichtungen, bei welchen ein Öffnen und Schließen der jeweiligen Halteabschnitte der Klammervorrichtung mittels eines Aktuators aktiv durchgeführt wird. Solche aktiven Klammervorrichtungen dienen insbesondere dazu, eine sichere und schonende Übernahme der jeweiligen Behälter von einer vorhergehenden Klammervorrichtung zu ermöglichen oder eine ebenso sichere und behälterschonende Übergabe der Behälter an eine nachfolgende Klammervorrichtung zu gewährleisten. Insbesondere kann durch das aktive Öffnen und Schließen der jeweiligen Klammervorrichtung eine erhöhte Reibung an dem jeweiligen Behälter, welche beispielsweise zu einem Verkratzen des Behälters führen könnte, vermieden werden und andererseits kann eine vorgegebene Haltekraft beziehungsweise Klemmkraft eingestellt werden, welche innerhalb eines vorgegebenen Toleranzbereichs der Behälterdimension eingehalten werden kann. Solche aktiven Klammervorrichtungen setzen sich aus einer Vielzahl von Einzelteilen, beispielsweise Klammerarmen, Buchsen, Federelementen, Vorspannelementen und entsprechenden Verbindungselementen zum sicheren Verbinden der vorgenannten Teile, zusammen. Derart aufgebaute Klammervorrichtungen sind mithin aufwendig zu reinigen und weisen einen entsprechend hohen Fertigungsaufwand auf.

Aus der EP 0 939 044 A1 ist ein Flaschengreifer bekannt, bei welchem eine Greifvorrichtung vorgesehen ist, welche zwei Greifarme aufweist, die mittels eines Steuernockens in eine Halteposition oder eine Löseposition bringbar sind. Der Steuernocken wirkt mit einer an jedem Greifarm ausgebildeten Anlagefläche zusammen und die Anlagefläche ist als Bestandteil eines elastischen Kissens ausgebildet, welches an dem jeweiligen Greifarm angeordnet ist.

Aus der EP 2 143 674 A2 ist eine aktive Klammervorrichtung zum Halten von Behältern bekannt, bei welchen zwei Greifarme beziehungsweise Klammerarme mit separaten Magnetanordnungen in einer geöffneten Position gehalten werden. Die Klammerarme weisen nach hinten orientierte Schließhebel auf, welche mit einem dazwischen angeordneten Schließnocken zusammenwirken, um die Klammerarme aus der geöffneten Position in eine geschlossene Position zu bringen.

Die DE 10 2005 014 838 A1 zeigt eine aktive Klammervorrichtung zum Halten von Gefäßen mit zwei Klammerarmen, die zum Öffnen und Schließen relativ zueinander beweglich sind. Um ein sicheres Halten der Gefäße zu ermöglichen, ist ein Greifarm der Klammer formstabil und der andere Greifarm formelastisch ausgebildet. Die Greifarme werden mittels daran angeordneter Magneten in eine geöffnete Position vorgespannt und mittels eines Steuernockens in die geschlossene Position geschwenkt.

Die US 2014/0175819 A1 beschreibt eine Greifeinrichtung zum Greifen eines Behälters.

Die US2014/0175819 A1 beschreibt eine aktive Klammervorrichtung mit Klammerarmen und einem Vorspannelement, wobei die Klammerarme und das Vorspannelement einstückig ausgebildet sind, und offenbart eine aktive Klammervorrichtung gemäß dem Obergbegriff des Anspruchs 1.

### Darstellung der Erfindung

Ausgehend von dem bekannten Stand der Technik ist es eine Aufgabe der vorliegenden Erfindung, eine verbesserte Klammervorrichtung zum Halten eines Behälters in einer Behälterbehandlungsvorrichtung bereitzustellen.

Die Aufgabe wird durch eine aktive Klammervorrichtung zum Halten eines Behälters in einer Behälterbehandlungsvorrichtung, bevorzugt zum Halten eines Getränkebehälters an einem Halsabschnitt mit den Merkmalen des Anspruchs 1 gelöst. Vorteilhafte Weiterbildungen ergeben sich aus den Unteransprüchen, der Beschreibung und den beigefügten Figuren.

Entsprechend wird eine aktive Klammervorrichtung zum Halten eines Behälters in einer Behälterbehandlungsvorrichtung, bevorzugt zum Halten eines Getränkebehälters in einem Halsabschnitt, vorgeschlagen, wobei die aktive Klammervorrichtung zwei Klammerarme, die jeweils einen Halteabschnitt zum Halten des zu haltenden Behälters und jeweils einen Steuerabschnitt zur Interaktion mit einem Steuernocken zum aktiven Bewegen des jeweiligen Halteabschnitts aufweisen, und ein Vorspannelement zum Vorspannen der Halteabschnitte in eine vorgegebene Position umfasst. Erfindungsgemäß sind die Klammerarme und das Vorspannelement einstückig ausgebildet.

Damit sind die Klammerarme über das Vorspannelement miteinander verbunden und die Klammerarme und das Vorspannelement einstückig ausgebildet.

Dadurch, dass die Klammerarme über das Vorspannelement miteinander verbunden sind und die Klammerarme und das Vorspannelement einstückig ausgebildet sind, kann eine aktive Klammervorrichtung mit einem besonders einfachen Aufbau bereitgestellt werden.

Aufgrund der einstückigen Ausbildung ist die Teileanzahl im Vergleich zu herkömmlichen aktiven Klammervorrichtungen signifikant reduziert. Anstatt wie bisher eine Vielzahl an Einzelteilen, beispielsweise einzelne Klammerarme, separater Vorspannelemente mitsamt der zum Verbinden der vorgenannten Teile benötigten Verbindungselemente, vorsehen zu müssen, was einen aufwendigen Zusammenbau sowie aufgrund der vielen Spalte und Ritzen zwischen den einzelnen Teilen einen hohen Reinigungsaufwand bedingt, wird ein einziges Teil bereitgestellt.

Mithin entfällt auch der Aufwand eines Zusammenbaus, zudem sind einstückig aufgebaute Teile besonders einfach zu reinigen, so dass sich die vorgeschlagene aktive Klammervorrichtung insbesondere auch für Einsatz in Anlagen mit hohen Hygieneanforderungen eignet. Zudem kann eine aktive Klammervorrichtung mit den Merkmalen gemäß Anspruch 1 besonders einfach an eine Behälterbehandlungsvorrichtung montiert werden, da nicht auf eine korrekte Ausrichtung einer Vielzahl von einzelnen Teilen zueinander geachtet werden muss.

Die Klammerarme sind jeweils um eine Schwenkachse herum schwenkbar. Aufgrund des Schwenkens um die vorgegebenen Schwenkachsen können die Öffnungsposition und die Schließposition besonders genau eingenommen werden.

Die Klammerarme weisen gemäß der Erfindung jeweils voneinander beabstandete Stützelemente zum Stützen der Position der Klammerarme in Bezug auf eine Einbauposition der Klammervorrichtung, bevorzugt in Bezug auf die Schwenkachsen, gegen ein Verkippen auf. Hierbei ist jeweils ein Stützelement im Bereich der jeweiligen Schwenkachse beziehungsweise um diese herum und ein Stützelement beabstandet von der jeweiligen Schwenkachse an einem Ende des Steuerabschnitts ausgebildet.

Gemäß einer bevorzugten weiteren Ausführungsform spannt das Vorspannelement die Klammerarme in einer Öffnungsposition der Halteabschnitte vor, wobei die Steuerabschnitte zur Interaktion mit dem Steuernocken zum aktiven Bewegen der Halteabschnitte in eine Schließposition ausgebildet sind.

Dadurch ist erreicht, dass die Klammerarme stets in der Öffnungsposition gehalten sind und nur dann, wenn die Steuerabschnitte aktiv mittels des Steuernockens bewegt werden, beispielsweise durch ein Verschieben der Steuerabschnitte aus ihrer Ausgangslage heraus, welches durch ein Schwenken des Steuernockens erzeugt wird, die Klammerarme entsprechend umschwenken und in die Schließposition der Halteabschnitte wechseln. Schwenkt der Steuernocken zurück, so werden die Klammerarme aufgrund der Spannung in dem Vorspannelement wieder in die Öffnungsposition zurückbewegt und in dieser gehalten. Die Klammervorrichtung weist mithin stets eine geöffnete Position auf und schließt nur dann, wenn die Steuerabschnitte aktiv angesteuert werden, so dass die Klammervorrichtung auch nur dann greift, wenn sie aktiv dazu angesteuert wird. Ferner kann durch das Verschieben der Klammerarme durch den Steuernocken ein besonders sicheres Halten der Behälter erreicht werden.

Gemäß einer weiteren bevorzugten Ausführungsform spannt das Vorspannelement die Klammerarme in einer Schließposition der Halteabschnitte vor, wobei die Steuerabschnitte zur Interaktion mit dem Steuernocken zum aktiven Bewegen der Halteabschnitte in eine Öffnungsposition ausgebildet sind.

Dadurch ist erreicht, dass die Klammerarme stets in die Schließposition vorgespannt sind und nur dann, wenn die Steuerabschnitte aktiv mittels des Steuernockens bewegt werden, beispielsweise durch ein Verschieben der Steuerabschnitte aus ihrer Ausgangslage heraus, welches durch ein Schwenken des Steuernockens erzeugt wird, die Klammerarme entsprechend umschwenken und in die Öffnungsposition der Halteabschnitte wechseln. Schwenkt der Steuernocken zurück, so werden die Klammerarme aufgrund der Vorspannung in dem Vorspannelement wieder in die Schließposition zurückbewegt und in dieser gehalten.

Die Klammervorrichtung weist mithin stets eine geschlossene Position auf und öffnet nur dann, wenn die Steuerabschnitte aktiv angesteuert werden, so dass die Klammervorrichtung zum Greifen des Behälters vorgespannt ist. Da bei Behälterbehandlungsanlagen zumeist in einem Großteil des Bewegungsbereichs der an daran montierten Klammervorrichtungen zu behandelnde Behälter gehalten werden, kann so auf zusätzliche Elemente verzichtet werden, welche anderweitig zum Halten der Klammervorrichtungen in der geschlossenen Position notwendig wären. Entsprechend können Steuernocken, welche zum aktiven Öffnen der Klammervorrichtungen vonnöten sind, nur in den Bereichen vorgesehen werden, in welchen die Halteabschnitte in der Öffnungsposition vorliegen müssen, beispielsweise zur Übernahme oder Übergabe eines Behälters.

Wenn die Steuerabschnitte entsprechend einer weiteren bevorzugten Ausführungsform an dem Klammerarmen jeweils in Form eines Hebelarms ausgebildeten sind, kann das Interagieren mit dem Steuernocken auf besonders einfache Weise erfolgen.

Durch ein Bewegen der Hebelarme erfolgt ein Schwenken der Klammerarme um die Schwenkachsen, so dass die Steuernocke relativ zu den Klammerarmen einen fest positionierten Drehpunkt aufweisen kann und lediglich zu verdrehen ist.

Gemäß einer weiteren bevorzugten Ausführungsform ist das Vorspannelement als Bügelfeder ausgebildet, wobei das Vorspannelement bevorzugt in Form eines sich von einem Klammerarm zum anderen Klammerarm erstreckenden Bogens ausgebildet ist.

Ein derart ausgebildetes Vorspannelement weist eine leicht zu reinigende Form auf, welche zudem in einfacher Weise hergestellt werden kann. Zudem kann über eine Länge der Bügelfeder beziehungsweise des Bogens sowie deren beziehungsweise dessen Profil eine Vorspannkraft, mit welcher das Vorspannelement die Klammerarme vorspannt, besonders genau vorgegeben und/oder an den jeweiligen Anwendungsfall angepasst sein.

Wenn die Steuerabschnitte und das Vorspannelement entsprechend einer weiteren bevorzugten Ausführungsform auf einer den Halteabschnitten gegenüberliegenden Seite der Klammerarme angeordnet sind, kann erreicht werden, dass im Bereich des Haltebereichs keine das Halten des Behälters störenden Teile vorliegen. Zudem ist dadurch die Wahrscheinlichkeit, dass die Steuerabschnitte und das Vorspannelement einem Behandlungsmedium, beispielsweise einem in den Behälter zu füllendes oder gefülltes Füllprodukt auf die Steuerabschnitte und das Vorspannelement gelangen, reduziert.

Bevorzugt sind bezogen auf die Schwenkachsen die Halteabschnitte jeweils auf einer Seite der Klammerarme angeordnet und die Steuerabschnitte und/oder das Vorspannelement auf der jeweils anderen Seite angeordnet.

Um die aktive Klammervorrichtung zum Einsatz bei Anwendungen mit erhöhter oder hohen Hygieneanwendungen, beispielsweise aseptische Anwendungen, als besonders geeignet auszubilden, können zumindest die Klammerarme an ihrer Oberseite schräge Flächen zum Ableiten von Flüssigkeiten aufweisen.

Dadurch ist erreicht, dass auf die schrägen Flächen auftreffende Partikel und/oder Flüssigkeiten von der schrägen Fläche schwerkraftbedingt abgleiten und das Ausbilden dauerhafter Verschmutzungen wie etwa ein mikrobiologischer Film vermindert oder gar gänzlich verhindert ist.

Bevorzugt sind die schrägen Flächen dabei derart ausgebildet, dass sie mit einer senkrecht zu den Schwenkachsen orientierten Ebene einen Winkel von mindestens 3° einschließen und/oder bezogen auf eine Einbauposition der Klammervorrichtung an einer Behälterbehandlungsvorrichtung mit einer senkrecht zur Richtung der Erdbeschleunigung orientierten Ebene einen Winkel von mindestens 3° einschließen.

Ferner sind die schrägen Flächen bevorzugt derart orientiert, dass ein Abgleiten von Partikeln nach außen, mithin von einer Mitte oder Mittelebene der Klammervorrichtung weg bereitgestellt ist. Mit anderen Worten sind zumindest die Klammerarme jeweils nach außen hin abgeschrägt.

Gemäß einer weiteren bevorzugten Ausführungsform ist jeweils ein Stützelement an einem freien Ende des als Haltearm ausgebildeten Steuerbereichs und/oder an dem Vorspannelement ausgebildet.

Die Stützelemente wirken bevorzugt mit entsprechenden Abstützbereichen beziehungsweise Abstützflächen der Behälterbehandlungsvorrichtung zusammen, an welchen sie sich abstützen und so die Klammervorrichtung bezogen auf die Schwenkachsen gegen ein Verkippen stützen. Ein sich in einer Lagerung der Klammervorrichtung an den Schwenkachsen ausbildenden Lagerspiel kann hierdurch nahezu oder gar gänzlich verhindert werden.

Gemäß einer weiteren bevorzugten Ausführungsform sind die Steuerabschnitte elastisch ausgebildet, wobei bevorzugt jeweils an einem den Steuerabschnitt ausbildenden Hebelarm ein elastisches Element, bevorzugt einstückig, ausgebildet ist und/oder die Steuerabschnitte formelastisch ausgebildet sind, wobei bevorzugt der Hebelarm eine Länge und ein Profil aufweist, derart dass der Hebelarm bevorzugt zumindest innerhalb eines Vorgabebereichs elastisch verformbar ist.

Dadurch kann der Steuerabschnitt entsprechend der von dem Steuernocken aufgebrachten Kraft folgen, und mittels der Vorspannung entsprechend ein sanftes Aufbringen dieser Kraft über die Klammerarme auf den Halteabschnitt ein sanftes und gleichzeitig zuverlässiges Halten des Behälters ermöglichen. Ferner kann zum einen ein sanftes Betätigen der Klammervorrichtung mittels der Steuernocke erreicht werden, und zum anderen können über das dadurch erreichte elastische Verformungsvermögen der Steuerabschnitte Toleranzen in der Behältergröße ausgeglichen werden, so dass entsprechend ein Halten von Behältern innerhalb eines bestimmten Toleranzbereiches sicher möglich ist. Dies ermöglicht auch in bestimmten Grenzen das sichere Halten von falsch gegriffenen Behältern.

Wenn die Klammerarme bevorzugt samt Halteabschnitten und Steuerabschnitten und das Vorspannelement einteilig als 3D-Druck-Teil oder Spritzgussteil, ausgebildet sind, kann eine einfache und kostengünstige Herstellung und gleichzeitig eine hohe Formfreiheit erreicht werden. Mithin kann die Form der Klammerarme und des Vorspannelement einstückig ausgebildet sein und dennoch gezielt an die Erfordernisse des jeweiligen Anwendungsfalls angepasst werden.

Gemäß einer weiteren bevorzugten Ausführungsform sind die Klammerarme bevorzugt samt Halteabschnitten und Steuerabschnitten und das Vorspannelement einteilig aus einem Kunststoff, besonders bevorzugt aus einem technischen Kunststoff oder einem Hochleistungskunststoff, ganz besonders bevorzugt aus PEEK, ausgebildet.

Aufgrund der guten Verarbeitbarkeit von Kunststoffen ist eine einfache Fertigung erreicht. Zudem kann die aktive Klammervorrichtung einerseits die benötigten mechanischen Eigenschaften aufweisen, beispielsweise kann durch die Wahl des Kunststoffs, bevorzugt PA, insbesondere PA6 oder PA66, oder PEEK, eine hohe Dauerbeständigkeit gegen mechanisches Versagen und eine genügende Vorspannung bereitgestellt werden.

Zudem ist es möglich, auf bei herkömmlichen aktiven Klammervorrichtungen notwendige Lagerbuchsen, mittels welchen in der Regel metallene Klammerarme gelagert sind, verzichtet werden, da in die Klammerarme selbst aufgrund der Eigenschaften, insbesondere der Gleiteigenschaften des ausgewählten Kunststoffs, insbesondere bei PEEK, eine Lagerbohrung mit den erforderlichen Toleranzen und Gleiteigenschaften in einfacher Weise einbringbar ist.

Mithin kann durch die einstückige Ausbildung von Klammerarmen und Vorspannelement aus dem Kunststoff ein einfach zu fertigendes und leicht zu montierendes und demontierendes Austauschteil bereitgestellt werden. Verschlissene oder alte Teile können granuliert und das daraus gewonnen Material wieder für die Herstellung neuer Teile verwendet werden, so dass sich der Materialeinsatz verringert. Zudem weist eine derart ausgebildete aktive Klammervorrichtung aufgrund des Kunststoffs der Klammerarme und des Vorspannelements, insbesondere in Vergleich zu herkömmlichen Klammervorrichtungen mit Klammerarmen und/oder Vorspannelementen aus Metall, ein geringes Gewicht auf.

Die oben gestellte Aufgabe wird ferner durch einen Klammerarm zum Halten eines Behälters in einer Klammervorrichtung mit den nachfolgenden Merkmalen gelöst. Vorteilhafte Weiterbildungen ergeben sich aus der Beschreibung und den beigefügten Figuren.

Entsprechend wird ein Klammerarm zum Halten eines Behälters in einer Klammervorrichtung vorgeschlagen, umfassend einen Halteabschnitt zum Halten des zu haltenden Behälters und einen Steuerabschnitt zur Interaktion mit einem Steuernocken zum aktiven Bewegen des Halteabschnitts. Der Klammerarm weist mindestens zwei voneinander beabstandete Stützelemente zum Stützen der Position des Klammerarms in Bezug auf eine Schwenkachse des Klammerarms gegen ein Verkippen in Bezug auf eine Einbauposition in der Klammervorrichtung auf.

Die Stützelemente wirken bevorzugt mit entsprechenden Abstützbereichen beziehungsweise Abstützflächen einer Behälterbehandlungsvorrichtung zusammen, an welchen sie sich abstützen und so den Klammerarm beziehungsweise eine den Klammerarm aufweisende Klammervorrichtung bezogen auf die Schwenkachsen gegen ein Verkippen stützen. Ein sich in einer Lagerung des Klammerarms an der Schwenkachse ausbildendes Lagerspiel kann hierdurch nahezu oder gar gänzlich verhindert werden.

Dadurch, dass der Klammerarm mindestens zwei voneinander beabstandete Stützelemente zum Stützen der Position des Klammerarms in Bezug auf eine Schwenkachse des Klammerarms gegen ein Verkippen in Bezug auf eine Einbauposition in der Klammervorrichtung aufweist, kann eine aktive Klammervorrichtung mit einem besonders einfachen Aufbau bereitgestellt werden.

Da der Klammerarm selbst die mindestens zwei voneinander beabstandeten Stützelemente aufweist, kann die Teileanzahl im Vergleich zu herkömmlichen Klammervorrichtungen reduziert werden. Auf bisher erforderliche gesonderte Einheiten oder Vorrichtungen zum Abstützen der Klammerarme in der Klammervorrichtung und/oder zum Abstützten des in der Klammervorrichtung gehaltenen Behälters kann mithin verzichtet werden, wodurch ein Zusammenbau einer die Klammerarme aufweisenden Klammervorrichtung und/oder Behälterbehandlungsvorrichtung weniger aufwendig ist und aufgrund einer Reduzierung von Spalten und Ritzen zwischen den einzelnen Teilen der Reinigungsaufwand einer solchen Klammervorrichtung und/oder Behälterbehandlungsvorrichtung reduziert ist.

Zudem kann ein solcher Klammerarm besonders einfach an eine Klammervorrichtung und/oder an eine Behälterbehandlungsvorrichtung montiert werden, da nicht auf eine korrekte Ausrichtung zwischen dem Klammerarm und einer separaten Stützvorrichtung zueinander geachtet werden muss.Gemäß einer weiteren bevorzugten Ausführungsform des Klammerarms ist jeweils ein Stützelement im Bereich der Schwenkachse und ein Stützelement beabstandet von der Schwenkachse, bevorzugt an einem Ende des Steuerbereichs, besonders bevorzugt an einem freien Ende eines als Haltearm ausgebildeten Steuerbereichs, ausgebildet. Dadurch ist eine effektive Lagerung des Klammerarms und ein besonders effektiver Schutz gegen ein Verkippen bereitgestellt.

Mit zunehmendem Abstand zwischen dem Stützelement im Bereich der Schwenkachse und dem davon beabstandeten Stützelement ist ein in der Lagerung des Klammerarms mögliches Spiel zunehmend reduziert. Ein Verschieben des beanstandeten Stützelements in Richtung der Schwenkachse resultiert mit zunehmenden Abstand, mithin mit einer zunehmenden Länge, die zwischen den beiden Stützelementen vorliegt, einen entsprechend kleineren Verkippwinkel.

Bevorzugt ist der Steuerabschnitt elastisch ausgebildet, wobei bevorzugt an einem den Steuerabschnitt ausbildenden Hebelarm ein elastisches Element ausgebildet ist und/oder der Steuerabschnitt formelastisch ausgebildet ist, wobei bevorzugt der Hebelarm eine Länge und ein Profil aufweist, derart dass der Hebelarm bevorzugt zumindest innerhalb eines Vorgabebereichs elastisch verformbar ist. Dadurch kann der Steuerabschnitt entsprechend der von dem Steuernocken aufgebrachten Kraft folgen, und mittels der Vorspannung entsprechend ein sanftes Aufbringen dieser Kraft auf den Halteabschnitt ein sanftes und gleichzeitig zuverlässiges Halten des Behälters ermöglichen. Ferner kann zum einen ein sanftes Betätigen der Klammervorrichtung mittels der Steuernocke erreicht werden, und zum anderen können über das dadurch erreichte elastische Verformungsvermögen der Steuerabschnitte Toleranzen in der Behältergröße ausgeglichen werden, so dass entsprechend ein Halten von Behältern innerhalb eines bestimmten Toleranzbereiches sicher möglich ist. Dies ermöglicht auch in bestimmten Grenzen das sichere Halten von falsch gegriffenen Behältern.

Wenn der Klammerarm und zumindest ein Stützelement einteilig ausgebildet sind, kann eine einfache und kostengünstige Herstellung und gleichzeitig eine hohe Formfreiheit erreicht werden.

Gemäß einer weiteren bevorzugten Ausführungsform sind der Klammerarm und zumindest ein Stützelement als 3D-Druck-Teil oder Spritzgussteil ausgebildet, bevorzugt aus einem Kunststoff, besonders bevorzugt aus einem technischen Kunststoff oder einem Hochleistungskunststoff, ganz besonders bevorzugt aus PEEK.

Aufgrund der guten Verarbeitbarkeit von Kunststoffen ist eine einfache Fertigung erreicht. Zudem kann der Klammerarm einerseits die benötigten mechanischen Eigenschaften aufweisen, beispielsweise kann durch die Wahl des Kunststoffs, bevorzugt PA, insbesondere PA6 oder PA66, oder PEEK, eine hohe Dauerbeständigkeit gegen mechanisches Versagen und eine genügende Vorspannung bereitgestellt werden.

Zudem ist es möglich, auf bei herkömmlichen Klammerarmen notwendige Lagerbuchsen, mittels welchen in der Regel metallene Klammerarme gelagert sind, zu verzichten, da in die Klammerarme selbst aufgrund der Eigenschaften, insbesondere der Gleiteigenschaften des ausgewählten Kunststoffs, insbesondere bei PEEK, eine Lagerbohrung mit den erforderlichen Toleranzen und Gleiteigenschaften in einfacher Weise einbringbar ist.

Mithin kann durch die Ausbildung des Klammerarms und/oder des zumindest einen Stützelements aus dem Kunststoff ein einfach zu fertigendes und leicht zu montierendes und demontierendes Austauschteil bereitgestellt werden. Verschlissene oder alte Teile können granuliert und das daraus gewonnen Material wieder für die Herstellung neuer Teile verwendet werden, so dass sich der Materialeinsatz verringert. Zudem weist ein derart ausgebildeter Klammerarm und/oder ein derart ausgebildetes Stützelement aufgrund des Kunststoffs, insbesondere in Vergleich zu herkömmlichen Klammervorrichtungen mit Klammerarmen aus Metall und separaten Stützvorrichtungen, ein geringes Gewicht auf.

Alternativ und/oder zusätzlich kann gemäß einer weiteren bevorzugten Ausführungsform zumindest ein Stützelement ein anderes Material als der Klammerarm aufweisen, bevorzugt ein Metall beziehungsweise eine Metalllegierung und/oder kann zumindest ein Stützelement als separates Teil, bevorzugt als Lagerbuchse, bereitgestellt sein. Dadurch ist es möglich, das Stützelement mit den erforderlichen mechanischen Eigenschaften, insbesondere einer erforderlichen Verformungsfestigkeit und Abriebfestigkeit bereitzustellen, und andere, weniger beanspruchte Bereiche des Klammerarms aus einem anderen Material, das beispielsweise leichter und/oder günstiger ist, auszubilden.

Bevorzugt ist das zumindest eine Stützelement, das ein anderes Material aufweist, als der Klammerarm, in den Klammerarm eingeschoben und/oder als Einsatz eingespritzt beziehungsweise dreidimensional umdruckt.

Um die aktive Klammervorrichtung zum Einsatz bei Anwendungen mit erhöhter oder hohen Hygieneanforderungen, beispielsweise zum Einsatz in aseptischen Anwendungen, als besonders geeignet auszubilden, kann eine Oberseite des Klammerarms zumindest eine schräg verlaufende Fläche zum Ableiten von Flüssigkeiten aufweisen.

Dadurch ist erreicht, dass auf die schrägen Flächen auftreffende Partikel und/oder Flüssigkeiten von der schrägen Fläche schwerkraftbedingt abgleiten und das Ausbilden dauerhafter Verschmutzungen wie etwa ein mikrobiologischer Film vermindert oder gar gänzlich verhindert ist.

Bevorzugt sind die schrägen Flächen dabei derart ausgebildet, dass sie mit einer senkrecht zu den Schwenkachsen orientierten Ebene einen Winkel von mindestens 3° einschließen und/oder bezogen auf eine Einbauposition der Klammervorrichtung an einer Behälterbehandlungsvorrichtung mit einer senkrecht zur Richtung der Erdbeschleunigung orientierten Ebene einen Winkel von mindestens 3° einschließen.

Ferner sind die schrägen Flächen bevorzugt derart orientiert, dass ein Abgleiten von Partikeln nach außen, mithin von einer Mitte oder Mittelebene einer zumindest einen Klammerarm aufweisenden Klammervorrichtung weg bereitgestellt ist. Mit anderen Worten sind die Klammerarme dann jeweils nach außen hin abgeschrägt.

Die oben gestellte Aufgabe wird weiterhin durch eine Behälterbehandlungsvorrichtung zum Behandeln von Behältern gelöst, welche einen Klammerträger und zumindest eine an diesem angeordnete aktive Klammervorrichtung gemäß einer der vorstehenden Ausführungsformen und/oder eine Klammervorrichtung mit zumindest einem Klammerarm gemäß einer der vorstehenden Ausführungsformen aufweist. Vorteilhafte Weiterbildungen der Behälterbehandlungsvorrichtung ergeben sich aus der vorliegenden Beschreibung und den Figuren.

Alternativ können die Klammerarme und das Vorspannelement in den vorgenannten Ausführungsformen auch als Einzelteile bereitgestellt sein.

### Kurze Beschreibung der Figuren

Bevorzugte weitere Ausführungsformen der Erfindung werden durch die nachfolgende Beschreibung der Figuren näher erläutert. Dabei zeigen:
Figur 1 schematisch eine perspektivische Seitenansicht einer aktiven Klammervorrichtung zum Halten eines Behälters;
Figur 2 schematisch eine Vorderansicht der aktiven Klammervorrichtung aus Figur 1;
Figur 3 schematisch eine Draufsicht der aktiven Klammervorrichtung aus Figur 1 in Interaktion mit einem Steuernocken;
Figur 4 schematisch eine perspektivische Seitenansicht von unten eines Teilbereichs einer Behälterbehandlungsvorrichtung mit einer aktiven Klammervorrichtung gemäß Figur 1;
Figur 5 schematisch eine perspektivische Seitenansicht von oben des Teilbereichs der Behälterbehandlungsvorrichtung aus Figur 4;
Figur 6 schematisch eine Seitenansicht des Teilbereichs der Behälterbehandlungsvorrichtung aus Figur 4;
Figur 7 schematisch eine Draufsicht einer Behälterbehandlungsvorrichtung mit einer aktiven Klammervorrichtung gemäß einer weiteren Ausführungsform;
Figur 8 schematisch eine perspektivische Seitenansicht der aktiven Klammervorrichtung aus Figur 7;
Figur 9 schematisch eine Seitenansicht der Klammervorrichtung aus Figur 8;
Figur 10 schematisch eine aktive Klammervorrichtung gemäß einer weiteren Ausführungsform; und
Figur 11 schematisch die aktive Klammervorrichtung aus Figur 10 in einer Seitenansicht.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

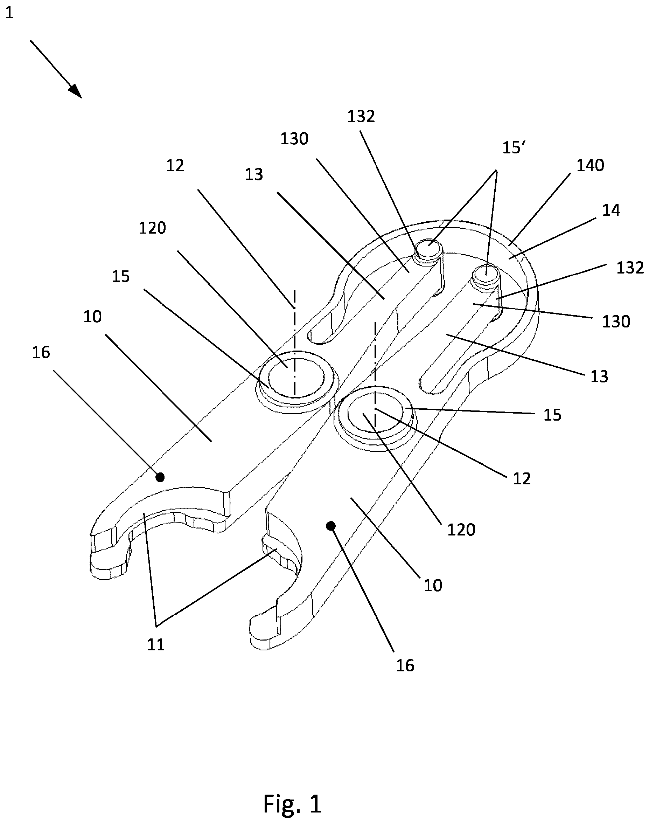

In Figur 1 ist schematisch eine perspektivische Draufsicht einer aktiven Klammervorrichtung 1 zum Halten eines hier nicht gezeigten Behälters gezeigt.

Die aktive Klammervorrichtung 1 weist zwei Klammerarme 10 mit jeweils einem Halteabschnitt 11 zum Halten des zu haltenden Behälters auf. Der Halteabschnitt 11 greift dabei typischer Weise an einem Halsabschnitt des zu haltenden Behälters an - beispielsweise direkt unter einem Tragring. Die aktive Klammervorrichtung 1 kann entsprechend vorteilhaft für ein "neck handling" von Behältern in einer Behälterbehandlungsvorrichtung vorgesehen seni.

Die Klammerarme 10 weisen weiterhin jeweils einen Steuerabschnitt 13 zur Interaktion mit einem hier nicht gezeigten Steuernocken zum aktiven Bewegen der Klammerarme 10 und damit auch der Halteabschnitte 11 auf.

Jeder Klammerarm 10 weist zwischen dem Halteabschnitt 11 und dem Steuerabschnitt 13 eine Bohrung 120 auf, durch die eine Schwenkachse 12 verläuft. Entsprechend kann durch eine schwenkbare Anbringung der Klammerarme 10 an einer Behälterbehandlungsvorrichtung beispielsweise mittels jeweils durch die Bohrungen 120 geführten Bolzen eine Verschwenkung um die Schwenkachse 12 erreicht werden.

Die Steuerabschnitte 13 der Klammerarme 10 sind jeweils in Form eines sich von dem Bereich der Schwenkachse 12 nach hinten, mithin bezogen auf die Schwenkachse 12 auf die dem Halteabschnitt 11 gegenüberliegenden Seite, erstreckenden Hebelarms 130 ausgebildet.

Die Klammerarme 10 sind über ein Vorspannelement 14 in Form eines sich von einem Klammerarm 10 zum anderen Klammerarm 10 erstreckenden Bogens 140 miteinander verbunden. Die Klammerarme 10 und das Vorspannelement 14 sind dabei einstückig miteinander ausgebildet. Der Bogen 140 erstreckt sich von dem Bereich der Schwenkachsen 12 nach hinten und umspannt die Hebelarme 130.

Das Vorspannelement 14 spannt die Klammerarme 10 in einer Öffnungsposition der Halteabschnitte 11 vor. Mithin sind die Klammerarme 10 durch das Vorspannelement 14 in einer Position zueinander gehalten, in welcher die Halteabschnitte 11 wie in Figur 1 gezeigt die Öffnungsposition einnehmen.

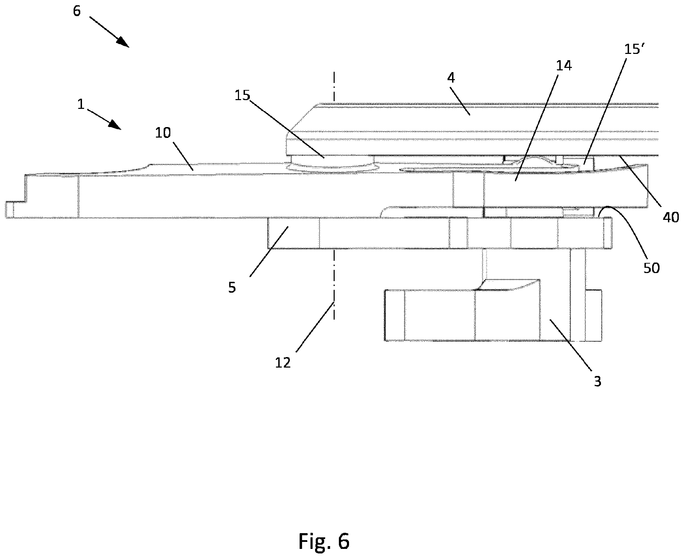

Um die Bohrungen 120 herum ist jeweils ein ringförmiges Stützelement 15 vorgesehen. An einem freien Ende 132 des jeweiligen Hebelarms 130 ist jeweils ein weiteres Stützelement 15' vorgesehen. Die Stützelemente 15, 15' dienen dazu, die Position der Klammerarme 10 in Bezug auf eine Einbauposition der Klammervorrichtung 1 an der Behälterbehandlungsvorrichtung abzustützen, wie weiter im Detail zu Figur 6 beschrieben wird.

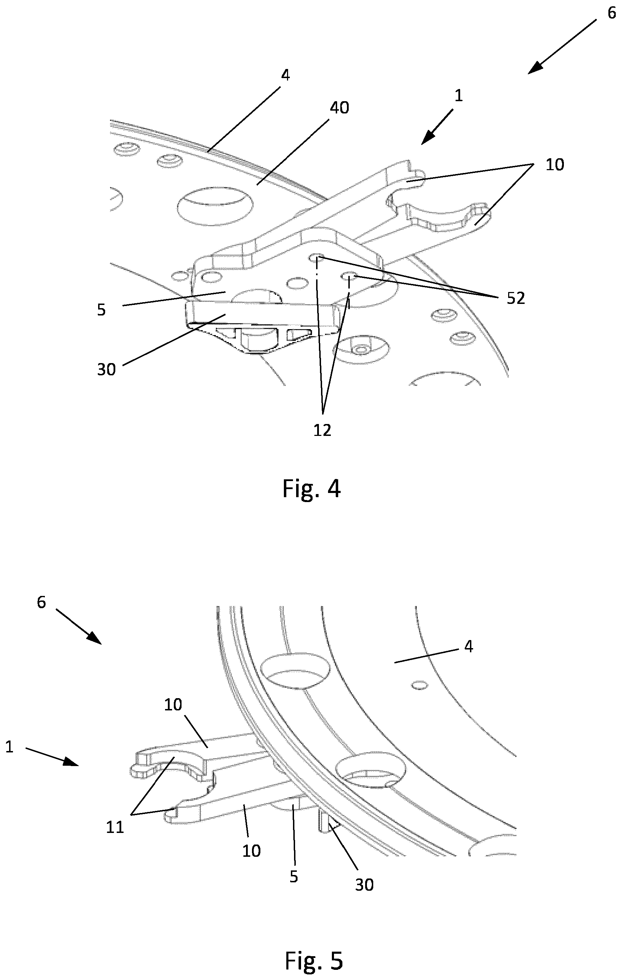

Ferner weisen die Klammerarme 10 an ihrer Oberseite schräge Flächen 16 zum Ableiten von Flüssigkeiten auf. Dadurch wird erreicht, dass auf die schrägen Flächen 16 auftreffende Partikel und/oder Flüssigkeiten von der schrägen Fläche 16 schwerkraftbedingt abgleiten und das Ausbilden dauerhafter Verschmutzungen wie etwa ein mikrobiologischer Film vermindert oder gar gänzlich verhindert ist. Die schrägen Flächen 16 erstrecken sich zumindest in dem Bereich der aktiven Klammervorrichtung 1, in der diese in den Behandlungsbereich der Behälterbehandlungsvorrichtung hereinragen. Dies ist typischer Weise zumindest im Bereich zwischen dem Halteabschnitt 11 und der Schwenkachse 12 der Fall. Dies ist in den Figuren 4 bis 6 nachfolgend noch einmal gezeigt.

In einer bevorzugten Weiterbildung erstrecken sich die schrägen Flächen im Wesentlichen über die gesamte Oberseite der Klammerarme 10 und zu großen Teilen auch über das als Bogen 140 ausgebildete Vorspannelement 14.

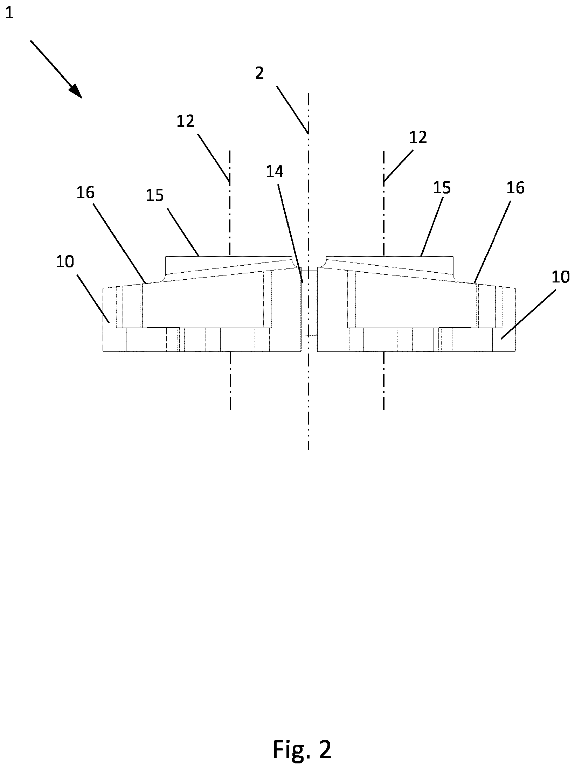

Figur 2 zeigt schematisch eine Vorderansicht der aktiven Klammervorrichtung 1 aus Figur 1. Deutlich zu erkennen sind die schrägen Flächen 16 auf der Oberseite der Klammerarme 10.

Die schrägen Flächen 16 sind dabei derart orientiert, dass sie in Bezug auf eine Mittellängsebene beziehungsweise Mittelachse 2 gesehen ein Abgleiten von Partikeln nach außen, mithin von der Mittellängsebene beziehungsweise Mittelachse 2 der Klammervorrichtung 1 weg bereitgestellt ist. Mit anderen Worten sind zumindest die Oberseiten der Klammerarme 10 jeweils nach außen hin abgeschrägt. Von der Abschrägung ausgenommen sind die Stützelemente 15, 15' deren Oberflächen sich senkrecht zu den Schwenkachsen 12 erstrecken, um ein stabiles Anliegen an einem hier nicht gezeigten Befestigungsbereich der Behälterbehandlungsvorrichtung zu ermöglichen.

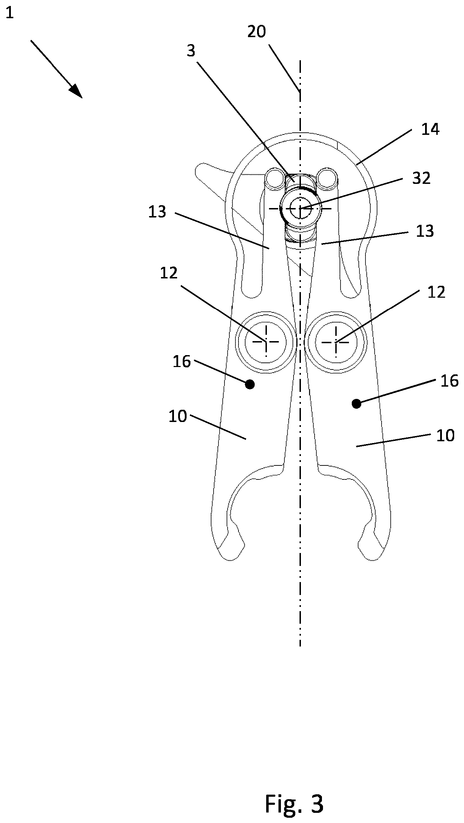

In Figur 3 ist schematisch eine Draufsicht der aktiven Klammervorrichtung 1 aus den Figuren 1 und 2 in Interaktion mit einem Steuernocken 3 gezeigt. Vorliegend erstreckt sich der Steuernocken 3 mit seiner größten Erstreckung parallel zur Mittellängsachse 20 der aktiven Klammervorrichtung 1. In diesem Zustand spannt das Vorspannelement 14 die Klammerarme 10 in die Öffnungsposition der Halteabschnitte 11 vor. Erfolgt eine Drehung des Steuernockens 3 um seine Drehachse 32, so verdrängt der Steuernocken 3 die Hebelarme 130 aus ihrer Position nach außen, so dass die Klammerarme 10 über ihre jeweilige Schwenkachse 12 eine Schwenkbewegung erfahren und entgegen der Spannung des Vorspannelements 14 in die Schließposition der Halteelemente 11 geschwenkt werden. Durch die Drehung des Steuernockens 3 werden die Halteabschnitte 11 mithin aktiv in ihre Schließposition bewegt. Folglich kann durch die Interaktion mit dem Steuernocken 3 ein aktives Greifen eines zu haltenden Behälters erfolgen.

Zum Öffnen der Klammervorrichtung 1 beziehungsweise, um die Haltebereiche 11 wieder in ihre Öffnungsposition zu bewegen, ist der Steuernocken 3 wieder in die in Figur 3 gezeigte Stellung zu drehen. Aufgrund der durch das Verschenken der Klammerarme 10 in dem Vorspannelement 14 erzeugten Spannung werden die Klammerarme 10 zurück in die in Figur 3 gezeigte Stellung geschwenkt und die Halteabschnitte 11 entsprechend zurück in ihre Öffnungsposition bewegt.

Die Klammerarme 10 sind mitsamt ihrer Halteabschnitte 11 und Steuerabschnitte 13 und dem Vorspannelement 14 einteilig aus einem Kunststoff, vorliegend PEEK, ausgebildet. Aufgrund der Elastizität des PEEK und der Form der Hebelarme 130, vorliegend ihrer Länge und ihres Querschnittprofils, sind die Steuerabschnitte 13 formelastisch ausgebildet. Mit anderen Worten sind die Hebelarme 130 basierend auf der Elastizität des PEEK als elastische Biegebalken ausgebildet. Dadurch kann der Steuerabschnitt 13 entsprechend der von dem Steuernocken 3 aufgebrachten Kraft folgen, und mittels der Vorspannung entsprechend ein sanftes Aufbringen dieser Kraft über die Klammerarme 10 auf den Halteabschnitt 11 ein sanftes und gleichzeitig zuverlässiges Halten des Behälters ermöglichen. Ferner kann zum einen ein sanftes Betätigen der Klammervorrichtung 1 mittels des Steuernockens 3 erreicht werden, und zum anderen können über das dadurch erreichte elastische Verformungsvermögen der Steuerabschnitte 13 Toleranzen in der Behältergröße ausgeglichen werden, so dass entsprechend ein Halten von Behältern innerhalb eines bestimmten Toleranzbereiches sicher möglich ist. Dies ermöglicht auch in bestimmten Grenzen das sichere und beschädigungsfreie Halten von falsch gegriffenen oder falsch orientiert zugeführten Behältern.

Das einstückige Teil, welches die Klammerarme 10 samt Halteabschnitten 11 und Steuerabschnitten 13 und das Vorspannelement 14 umfasst, ist vorliegend mittels eines 3D-DruckVerfahrens hergestellt. Alternativ kann es beispielsweise auch mittels Spritzgießen hergestellt sein.

Aus Figur 4 ist schematisch eine perspektivische Seitenansicht von unten eines Teilbereichs einer Behälterbehandlungsvorrichtung 6 mit einer aktiven Klammervorrichtung 1 gemäß Figur 1 gezeigt. Die Behälterbehandlungsvorrichtung 6 kann beispielsweise ein Rinserkarussell, ein Füllerkarussell, ein Verschließerkarussel oder ein Transportkarussell sein.

Die Behälterbehandlungsvorrichtung 6 weist einen um eine nicht gezeigte Achse drehbaren Klammerträger 4 auf. An dessen Unterseite 40 ist eine Vielzahl von aktiven Klammervorrichtungen 1 gemäß den Figuren 1 bis 3 angeordnet, wobei vorliegend beispielhaft eine der aktiven Klammervorrichtungen 1 beispielhaft gezeigt ist. Die aktive Klammervorrichtung 1 ist zwischen der Unterseite 40 und einer an dem Klammerträger 4 mit hier nicht gezeigten Befestigungselementen befestigten Gegenplatte 5 angeordnet. Um die Klammerarme 10 schwenkbar an dem Klammerträger 4 anzuordnen, sind diese über hier nicht gezeigten Bolzen, welche in die Bohrungen 120 der Klammerarme 10 sowie entsprechenden Aufnahmebohrungen an dem Klammerträger 4 und entsprechenden Aufnahmebohrungen 52 an der Gegenplatte 5 eingeführt sind, verbunden und mithin um die Schwenkachsen 12 herum schwenkbar gelagert.

Der Steuernocken 3 weist unterhalb der Gegenplatte 5 ein Hebelelement 30 auf, welches durch Interaktion mit einem nicht gezeigten Aktuator der Behälterbehandlungsvorrichtung 6 um 90° gedreht werden kann, so dass der Steuernocken 3 zwischen der in Figur 3 gezeigten Position und einer zu dieser um 90° gedrehten Position bewegbar ist. Alternativ kann der Steuernocken 3 auch derart profiliert sein, dass ein anderer Drehwinkel als die 90°, beispielsweise 30°, 45°, 50° oder 66° für ein Bewegen der Klammerarme 10 in die Schließposition der Halteabschnitte 11 durch die Interaktion der Steuerbereiche 13 mit dem Steuernocken 3 ermöglicht.

In Figur 5 ist der Teilbereich der Behälterbehandlungsvorrichtung 4 aus Figur 5 schematisch noch einmal in einer perspektivischen Seitenansicht von oben gezeigt. Deutlich zu erkennen ist, dass lediglich der Teil der Klammerarme 10, welcher sich von den Schwenkachsen 12 gesehen in Richtung der Halteabschnitte 11 erstreckt, über den Klammerträger 4 nach außen hinausragen. Die Steuerabschnitte 13 und das Vorspannelement 14 sowie auch der Steuernocken 3 samt Hebelelement 30 sind unter dem Klammerträger 4 angeordnet. So ist zum einen ein Schutz der Steuerabschnitte 13 und des Vorspannelements 14 sowie auch des Steuernockens 3 samt Hebelelements 30 gegen Verunreinigungen erreicht, zum anderen ragen keine die Aufnahme und das Halten der Behälter störenden Teile in den Bereich unterhalb der Haltebereiche 11.

Figur 6 zeigt schematisch eine Seitenansicht des Teilbereichs der Behälterbehandlungsvorrichtung 6 aus Figur 4. Hieraus ist zu erkennen, dass sich die Klammerarme 10 mit ihren Stützelementen 15 um die Schwenkachsen 12 herum an der Unterseite 40 des Klammerträgers 4 sowie an einer Deckseite 50 der Gegenplatte 5 abstützen. Ferner stützen sich die Klammerarme 10 mittels der von den Schwenkachsen 12 beabstandeten Stützelementes 15' in einem hinteren Bereich der aktiven Klammervorrichtung 6 ebenfalls an der Unterseite 40 und der Deckseite 50 ab. Dadurch ist ein in der aus Stiften und Bohrungen 120 gebildeten Lagerung der Klammerarme 10 vorliegendes Spiel reduziert. Insbesondere durch das Abstützen mittels der Stützelemente 15' kann so ein Verkippen der Klammerarme 10 in Bezug auf die Schwenkachsen 12 verhindert werden.

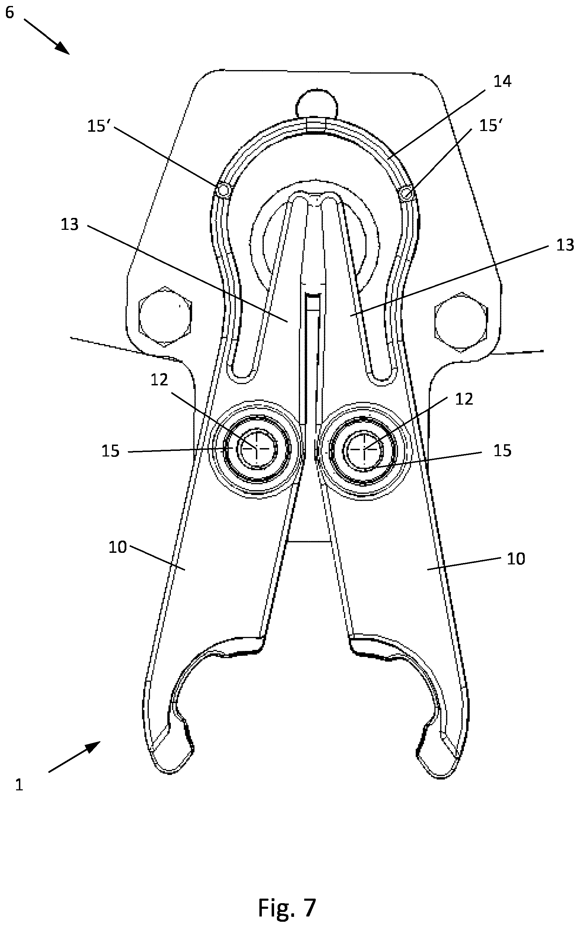

Figur 7 zeigt schematisch eine Draufsicht einer Behälterbehandlungsvorrichtung 6 mit einer aktiven Klammervorrichtung 1 gemäß einer weiteren Ausführungsform, welche im Wesentlichen jener aus Figur 1 entspricht. In dieser Ausführungsform sind die von den Schwenkachsen 12 beanstandeten Stützelemente 15' jedoch auf dem Vorspannelement 14 beidseits der Mittellängsachse 20 vorgesehen. Eine eventuell störende Interaktion, beispielsweise ein störendes Übergleiten eines Ringeinsatzes des Nockens, kann so vermieden werden.

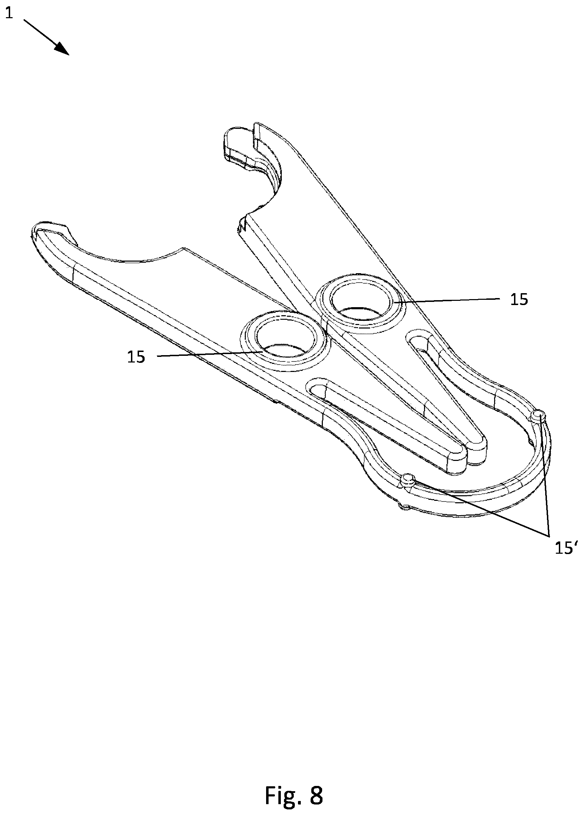

Figur 8 zeigt schematisch eine perspektivische Seitenansicht der aktiven Klammervorrichtung 1 aus Figur 7. Deutlich zu erkennen sind die einstückig ausgebildeten, erhabenen Bereiche, welche die Stützelemente 15 und 15' ausbilden.

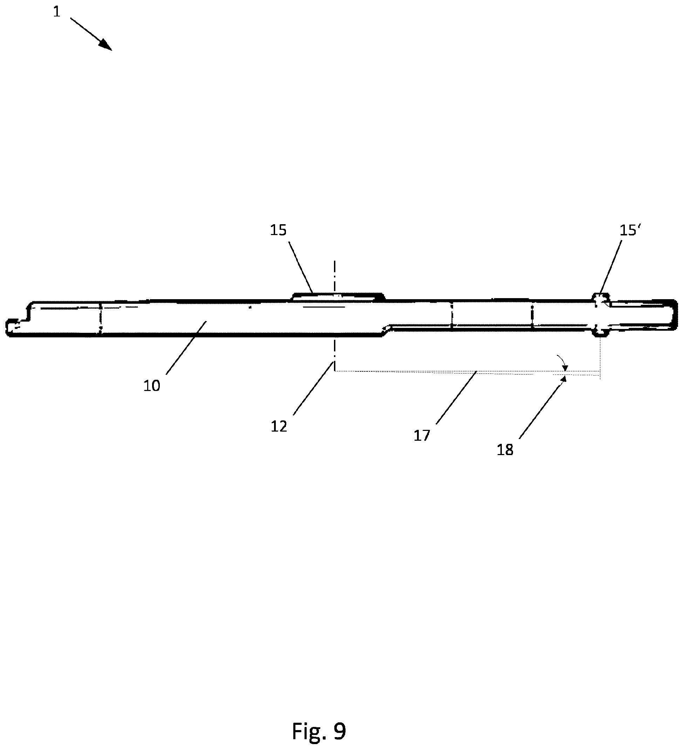

In Figur 9 ist schematisch eine Seitenansicht der Klammervorrichtung 1 aus Figur 8 gezeigt. Aufgrund des Abstands 17 zwischen den Stützelementen 15 im Bereiche der Schwenkachse 12 und den davon beabstandeten Stützelementen 15' bewirkt eine Verschiebung eines Stützelements 15' parallel zur Schwenkachse 12 lediglich eine marginales Verkippen entsprechend des mit dem Bezugszeichen 18 angedeuteten Verkippwinkels. Die Stützelemente 15' können mithin entsprechend der in Figur 6 gezeigten Ausführungsform spielend zwischen entsprechenden Abstützbereichen beziehungsweise Abstützflächen der Behälterbehandlungsvorrichtung 6 angeordnet sein. Das geringe Spiel in Richtung der Schwenkachse 12 zwischen den Stützelementen 15' und den Abstützbereichen beziehungsweise Abstützflächen bedingt beziehungsweise erlaubt aufgrund des Abstands 17 lediglich einen derart geringen Verkippwinkel 18, dass ein Verkippen der Klammerarme 10 auf einfache Weise nahezu gänzlich vermieden werden kann. Dadurch kann trotz des einfachen Aufbaus der Klammerarme 10 sowie der Klammervorrichtung 1 eine nahezu verkippfreie Lagerung bereitgestellt werden.

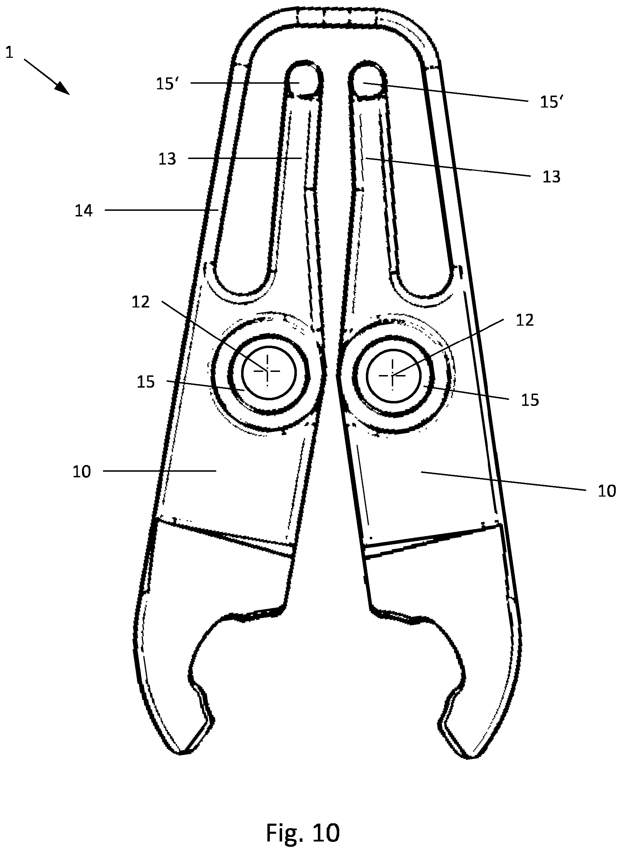

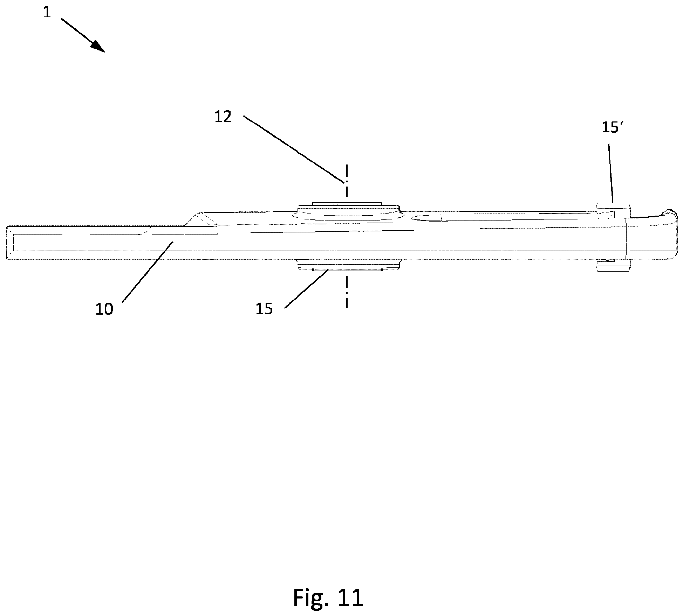

Den Figuren 10 und 11 ist schematisch eine aktive Klammervorrichtung 1 gemäß einer weiteren Ausführungsform zu entnehmen. Diese entspricht in ihrem Aufbau im Wesentlichen jener aus Figur 1, wobei das Vorspannelement 14 eine Bogenform mit geraden Teilbereichen aufweist. Zudem sind die Stützelemente 15, 15' als separate Teile aus einem Metall bereitgestellt. Die Stützelemente 15 im Bereich der Schwenkachsen 12 sind vorliegend als Lagerbuchsen ausgebildet und in dafür in den Klammerarmen 10 vorgesehene Bohrungen beziehungsweise Ausnehmungen eingeschoben. Dabei ist der Außendurchmesser der Stützelemente 15 derart gewählt, dass die Klemmarme 10 um die Lagerbuchsen schwenkbar sind. Die Lagerbuchsen können so bei einem Einbau in eine Behälterbehandlungsvorrichtung 6 fest verspannt werden.

Die von den Schwenkachsen 12 beabstandeten, hier ebenfalls metallenen Stützelemente 15' sind vorliegend an den Enden der Steuerabschnitte 13 von dem Material der Steuerabschnitte 13 umspritzt. Mit anderen Worten sind die Stützelemente als Einsätze beziehungsweise Inserts ausgebildet. Die Stirnseiten der Stützelemente15' sind frei von dem Material der Steuerabschnitte 13 und weisen eine abriebfeste Gleitfläche auf.

Alternativ können die Klammerarme 10 und das Vorspannelement 14 in den vorgenannten Ausführungsformen auch als Einzelteile bereitgestellt sein.

### Bezugszeichenliste

- 1: Klammervorrichtung
- 10: Klammerarm
- 11: Halteabschnitt
- 12: Schwenkachse
- 120: Bohrung
- 13: Steuerabschnitt
- 130: Hebelarm
- 132: Freies Ende
- 14: Vorspannelement
- 140: Bogen
- 15, 15': Stützelement
- 16: Schräge Fläche
- 17: Abstand
- 18: Verkippwinkel
- 2: Mittelachse
- 20: Mittellängsachse
- 3: Steuernocken
- 30: Hebelelement
- 32: Drehachse
- 4: Klammerträger
- 40: Unterseite
- 5: Gegenplatte
- 50: Deckseite
- 52: Aufnahmebohrung
- 6: Behälterbehandlungsvorrichtung

## Patentansprüche

1. Aktive Klammervorrichtung (1) zum Halten eines Behälters in einer Behälterbehandlungsvorrichtung, bevorzugt zum Halten eines Getränkebehälters in einem Halsabschnitt, umfassend zwei Klammerarme (10), die jeweils einen Halteabschnitt (11) zum Halten des zu haltenden Behälters und jeweils einen Steuerabschnitt (13) zur Interaktion mit einem Steuernocken (3) zum aktiven Bewegen des jeweiligen Halteabschnitts (11) aufweisen und um eine jeweilige Schwenkachse (12) schwenkbar sind, und ein Vorspannelement (14) zum Vorspannen der Halteabschnitte (11) in eine vorgegebene Position, wobei die Klammerarme (10) und das Vorspannelement (14) einstückig ausgebildet sind,
**dadurch gekennzeichnet, dass**
die Klammerarme (10) jeweils voneinander beabstandete Stützelemente (15, 15') zum Stützen der Position der Klammerarme (10) in Bezug auf eine Einbauposition der Klammervorrichtung (1) gegen ein Verkippen aufweisen, wobei
jeweils ein Stützelement (15) im Bereich der Schwenkachse (12) und ein Stützelement (15') beabstandet von der jeweiligen Schwenkachse (12) an einem Ende des Steuerabschnitts (13) ausgebildet ist,
wobei die Stützelemente (15, 15') als einstückig ausgebildete, erhabene Bereiche, ausgebildet sind.

2. Aktive Klammervorrichtung (1) gemäß Anspruch 1, **dadurch gekennzeichnet, dass** das Vorspannelement (14) die Klammerarme (10) in einer Öffnungsposition der Halteabschnitte (11) vorspannt und die Steuerabschnitte (13) zur Interaktion mit dem Steuernocken (3) zum aktiven Bewegen der Halteabschnitte (11) in eine Schließposition ausgebildet sind.

3. Aktive Klammervorrichtung (1) gemäß Anspruch 1, **dadurch gekennzeichnet, dass** das Vorspannelement (14) die Klammerarme (10) in einer Schließposition der Halteabschnitte (11) vorspannt und die Steuerabschnitte (13) zur Interaktion mit dem Steuernocken (3) zum aktiven Bewegen der Halteabschnitte (11) in eine Öffnungsposition ausgebildet sind.

4. Aktive Klammervorrichtung (1) gemäß einem der vorstehenden Ansprüche, **dadurch gekennzeichnet, dass** die Steuerabschnitte (13) an dem Klammerarmen (10) jeweils in Form eines Hebelarms (130) ausgebildet sind.

5. Aktive Klammervorrichtung (1) gemäß einem der vorstehenden Ansprüche, **dadurch gekennzeichnet, dass** das Vorspannelement (14) als Bügelfeder ausgebildet ist, wobei das Vorspannelement (14) bevorzugt in Form eines sich von einem Klammerarm (10) zu dem anderen Klammerarm (10) erstreckenden Bogens (140) ausgebildet ist.

6. Aktive Klammervorrichtung (1) gemäß einem der vorstehenden Ansprüche, **dadurch gekennzeichnet, dass** die Steuerabschnitte (13) und das Vorspannelement (14) auf einer den Halteabschnitten (11) gegenüberliegenden Seite der Klammerarme (10) angeordnet sind.

7. Aktive Klammervorrichtung (1) gemäß Anspruch 6, **dadurch gekennzeichnet, dass** bezogen auf die Schwenkachsen (12) die Halteabschnitte (11) jeweils auf einer Seite der Klammerarme (10) angeordnet sind und die Steuerabschnitte (13) und/oder das Vorspannelement (14) auf der jeweils anderen Seite angeordnet sind.

8. Aktive Klammervorrichtung (1) gemäß einem der vorstehenden Ansprüche, **dadurch gekennzeichnet, dass** zumindest die Klammerarme (10) an ihrer Oberseite schräg verlaufende Flächen (16) zum Ableiten von Flüssigkeiten aufweisen.

9. Aktive Klammervorrichtung (1) gemäß einem der vorstehenden Ansprüche, **dadurch gekennzeichnet, dass** jeweils ein Stützelement (15) an einem freien Ende (132) des als Haltearm (130) ausgebildeten Steuerabschnitts (13) und/oder an dem Vorspannelement (14) ausgebildet ist.

10. Aktive Klammervorrichtung (1) gemäß einem der vorstehenden Ansprüche, **dadurch gekennzeichnet, dass** die Steuerabschnitte (13) elastisch ausgebildet sind, wobei bevorzugt jeweils an einem den Steuerabschnitt (13) ausbildenden Hebelarm (130) ein elastisches Element ausgebildet ist und/oder die Steuerabschnitte (13) formelastisch ausgebildet sind, wobei bevorzugt der Hebelarm (130) eine Länge und ein Profil aufweist, derart dass der Hebelarm (130) bevorzugt zumindest innerhalb eines Vorgabebereichs elastisch verformbar ist.

11. Aktive Klammervorrichtung (1) gemäß einem der vorstehenden Ansprüche, **dadurch gekennzeichnet, dass** die Klammerarme (10) und das Vorspannelement (14) einteilig als 3D-Druck-Teil oder Spritzgussteil, bevorzugt aus einem Kunststoff, besonders bevorzugt aus einem technischen Kunststoff oder einem Hochleistungskunststoff, ganz besonders bevorzugt aus PEEK, ausgebildet sind.

## Claims

1. An active clamping apparatus (1) for holding a container in a container treatment apparatus, preferably for holding a beverage container in a neck portion, comprising two clamping arms (10) which each have a holding portion (11) for holding the container to be held and which each have a control portion (13) for interacting with a control cam (3) in order to actively move the relevant holding portion (11) and which are pivotable about a relevant pivot axis (12), and a preloading element (14) for preloading the holding portions (11) into a predefined position, wherein the clamping arms (10) and the preloading element (14) are formed in one piece,
**characterized in that**
the clamping arms (10) each have support elements (15, 15') which are spaced apart from one another and which support the position of the clamping arms (10) against tipping in relation to an installation position of the clamping apparatus (1), wherein
in each case a support element (15) is formed in the region of the pivot axis (12) and a support element (15') is formed spaced apart from the relevant pivot axis (12) at one end of the control portion (13),
wherein the support elements (15, 15') are formed as single-piece, raised regions.

2. The active clamping apparatus (1) according to claim 1,
**characterized in that** the preloading element (14) preloads the clamping arms (10) in an open position of the holding portions (11), and the control portions (13) are configured to interact with the control cam (3) to actively move the holding portions (11) into a closed position.

3. The active clamping apparatus (1) according to claim 1,
**characterized in that** the preloading element (14) preloads the clamping arms (10) in a closed position of the holding portions (11) and the control portions (13) are configured to interact with the control cam (3) to actively move the holding portions (11) into an open position.

4. The active clamping apparatus (1) according to any of the preceding claims, **characterized in that** the control portions (13) on the clamping arms (10) are each in the form of a lever arm (130).

5. The active clamping apparatus (1) according to any of the preceding claims, **characterized in that** the preloading element (14) is formed as a bow spring, wherein the preloading element (14) is preferably in the form of an arc (140) extending from one clamping arm (10) to the other clamping arm (10).

6. The active clamping apparatus (1) according to any of the preceding claims, **characterized in that** the control portions (13) and the preloading element (14) are arranged at an end of the clamping arms (10) opposite the holding portions (11).

7. The active clamping apparatus (1) according to claim 6,
**characterized in that,** with respect to the pivot axes (12), the holding portions (11) are each arranged at one end of the clamping arms (10), and the control portions (13) and/or the preloading element (14) are arranged at the relevant other end.

8. The active clamping apparatus (1) according to any of the preceding claims, **characterized in that** at least the clamping arms (10) have inclined surfaces (16) on the upper face thereof in order to drain off liquids.

9. The active clamping apparatus (1) according to any of the preceding claims, **characterized in that** a support element (15) is formed in each case at a free end (132) of the control portion (13) configured as a holding arm (130) and/or at the preloading element (14).

10. The active clamping apparatus (1) according to any of the preceding claims, **characterized in that** the control portions (13) are elastic, wherein preferably an elastic element is formed on each lever arm (130) forming the control portion (13) and/or the control portions (13) are shape-elastic, wherein preferably the lever arm (130) has a length and a profile such that the lever arm (130) is preferably elastically deformable at least within a predefined range.

11. The active clamping apparatus (1) according to any of the preceding claims, **characterized in that** the clamping arms (10) and the preloading element (14) are formed in a single piece as a 3D printed part or injection molded part, preferably made of a plastics material, particularly preferably of an engineering plastics material or of a high-performance plastics material, most preferably of PEEK.

## Revendications

1. Dispositif de serrage actif (1) destiné à maintenir un récipient dans un dispositif de traitement de récipients, de préférence destiné à maintenir un récipient pour boisson dans une section formant goulot, comprenant deux bras de serrage (10) qui présentent respectivement une section de maintien (11) destinée à maintenir le récipient à maintenir et respectivement une section de commande (13) destinée à interagir avec une came de commande (3) en vue du déplacement actif de la section de maintien (11) respective et sont pivotants autour d'un axe de pivotement (12) respectif, et un élément de précontrainte (14) destiné à précontraindre les sections de maintien (11) dans une position prédéfinie, dans lequel les bras de serrage (10) et l'élément de précontrainte (14) sont réalisés d'un seul tenant,
**caractérisé en ce que**
les bras de serrage (10) présentent des éléments de support (15, 15') espacés respectivement les uns des autres, destinés à supporter la position des bras de serrage (10) de manière à empêcher un basculement par rapport à une position de montage du dispositif de serrage (1), dans lequel
respectivement un élément de support (15) est réalisé dans la zone de l'axe de pivotement (12) et un élément de support (15') est réalisé à distance de l'axe de pivotement (12) respectif à une extrémité de la section de commande (13),
dans lequel les éléments de support (15, 15') sont réalisés sous la forme de zones en relief réalisées d'un seul tenant.

2. Dispositif de serrage actif (1) selon la revendication 1,
**caractérisé en ce que** l'élément de précontrainte (14) précontraint les bras de serrage (10) dans une position d'ouverture des sections de maintien (11) et les sections de commande (13) sont réalisées pour interagir avec la came de commande (3) afin de déplacer activement les sections de maintien (11) dans une position de fermeture.

3. Dispositif de serrage actif (1) selon la revendication 1,
**caractérisé en ce que** l'élément de précontrainte (14) précontraint les bras de serrage (10) dans une position de fermeture des sections de maintien (11) et les sections de commande (13) sont réalisées pour interagir avec la came de commande (3) afin de déplacer activement les sections de maintien (11) dans une position d'ouverture.

4. Dispositif de serrage actif (1) selon l'une des revendications précédentes,
**caractérisé en ce que** les sections de commande (13) sont réalisées sur les bras de serrage (10) respectivement sous la forme d'un bras de levier (130).

5. Dispositif de serrage actif (1) selon l'une des revendications précédentes,
**caractérisé en ce que** l'élément de précontrainte (14) est réalisé sous la forme d'un ressort en étrier, dans lequel l'élément de précontrainte (14) est de préférence réalisé sous la forme d'un arc (140) s'étendant d'un bras de serrage (10) à l'autre bras de serrage (10).

6. Dispositif de serrage actif (1) selon l'une des revendications précédentes,
**caractérisé en ce que** les sections de commande (13) et l'élément de précontrainte (14) sont disposés sur un côté des bras de serrage (10) opposé aux sections de maintien (11).

7. Dispositif de serrage actif (1) selon la revendication 6,
**caractérisé en ce que**, par rapport aux axes de pivotement (12), les sections de maintien (11) sont disposées respectivement sur un côté des bras de serrage (10) et les sections de commande (13) et/ou l'élément de précontrainte (14) sont disposés sur l'autre côté respectif.

8. Dispositif de serrage actif (1) selon l'une des revendications précédentes,
**caractérisé en ce qu'**au moins les bras de serrage (10) présentent, sur leur côté supérieur, des surfaces (16) s'étendant de manière inclinée et destinées à évacuer des liquides.

9. Dispositif de serrage actif (1) selon l'une des revendications précédentes,
**caractérisé en ce que** respectivement un élément de support (15) est réalisé à une extrémité libre (132) de la section de commande (13) réalisée sous forme de bras de maintien (130) et/ou sur l'élément de précontrainte (14).

10. Dispositif de serrage actif (1) selon l'une des revendications précédentes,
**caractérisé en ce que** les sections de commande (13) sont réalisées de manière à être élastiques, dans lequel respectivement un élément élastique est de préférence réalisé sur un bras de levier (130) réalisant la section de commande (13) et les sections de commande (13) sont réalisées de manière à être élastiques par déformation, dans lequel le bras de levier (130) présente de préférence une longueur et un profil de telle sorte que le bras de levier (130) est de préférence déformable élastiquement au moins à l'intérieur d'une zone prédéfinie.

11. Dispositif de serrage actif (1) selon l'une des revendications précédentes,
**caractérisé en ce que** les bras de serrage (10) et l'élément de précontrainte (14) sont réalisés d'un seul tenant sous forme de pièce d'impression 3D ou de pièce moulée par injection, de préférence en une matière plastique, de manière particulièrement préférée en une matière plastique technique ou en une matière plastique haute performance, de manière tout particulièrement préférée en PEEK.
